## Europäisches Patentamt

## European Patent Office

## Office européen des brevets

(19)

(11) Veröffentlichungsnummer: **0 133 980**
**B1**

(12) # EUROPÄISCHE PATENTSCHRIFT

(45) Veröffentlichungstag der Patentschrift:
08.04.87 ,

(21) Anmeldenummer: **84108987.3**

(22) Anmeldetag: **28.07.84**

(51) Int. Cl.⁴: **H 04 N 3/18**

(54) **Standby-Betrieb bei einer mit einem Schaltnetzteil kombinierten Horizontalendstufenschaltung.**

(30) Priorität: **04.08.83 DE 3328181**

(43) Veröffentlichungstag der Anmeldung:
**13.03.85 Patentblatt 85/11**

(45) Bekanntmachung des Hinweises auf die Patenterteilung:
**08.04.87 Patentblatt 87/15**

(84) Benannte Vertragsstaaten:
**DE FR GB IT**

(56) Entgegenhaltungen:
**DE-A-3 302 756**
**US-A-4 392 090**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Zipser, Otfried, Schafhofstrasse 23, D-8501 Cadolzburg (DE)**

(74) Vertreter: **Kolb, Max, Kurgartenstrasse 37, D-8510 Fuerth/Bayern (DE)**

EP 0 133 980 B1

**Beschreibung**

Die Erfindung betrifft ein Schaltnetzteil mit kombinierter Horizontal-Endstufenschaltung in Fernsehempfängern mit den im Oberbegriff des Anspruchs 1 angegebenen Merkmalen.

Ein solches Schaltnetzteil wurde von derselben Anmelderin in der nicht vorveröffentlichten europäischen Patentanmeldung 82 111 164.8 mit der Veröffentlichungsnummer EP-A-0 090 085 (veröffentlicht am 5.10.1983) vorgestellt. Dieses Schaltnetzteil zeichnet sich aus durch einen primärseitigen frei anlaufenden Regelkreis zur Steuerung des Hauptstromweges und einen Regelschalter, über den die aus dem Netz gewonnene, ungeregelte Gleichspannung der Primärwicklung $n_1$ des Transformators zugeführt wird.

In der lose an die Primärwicklung $n_1$ gekoppelten Sekundärwicklung $n_2$ wird ein Strom induziert, der zum Anlauf und zur Versorgung der Horizontalendstufe vorgesehen ist. In einer zweiten, fest an die Primärwicklung $n_1$ angekoppelten Wicklung $n_3$ wird die Niedervoltspannung für die Horizontalansteuerung, die einen internen Treiber enthält, und die Kleinsignalstufen erzeugt. Weiterhin sind Sekundärwicklungen vorgesehen, die fest an $n_2$ gekoppelt sind und die Spannungen für die RGB-Endstufen, Heizung, usw. erzeugen. Über die Trennstelle $n_1/n_2$ des Transformators wird während des Rücklaufintervalles des Ablenktransistors 4 eine Spannung auf die Primärwicklung $n_1$ übertragen, die zur Ausschaltung des Regelschalters verwendet wird. In der fest an die Wicklung $n_2$ gekoppelten Wicklung $n_4$ wird eine Spannung induziert, die zur Synchronisation und Steuerung des Regelkreises 2 herangezogen wird. Der durch den Widerstand 6 fließende Strom kann als Überlast-Referenzstrom zum Abschalten des Regelschalters herangezogen werden. Belastungsänderungen werden in der fest an $n_2$ gekoppelten Wicklung $n_4$ erfaßt und über eine Beeinflussung der Stromflußzeit des Hauptstromkreises ausgeregelt. Die oben genante europäische Anmeldung EP-A2- 0 090 085 enthält jedoch keinen Hinweis auf einen Standby-Betrieb.

Aus der US-PS 4 392 090 ist ein Schaltnetzteil mit kombinierter Horizontalendstufenschaltung und Standby-Betrieb bekannt, bei dem ein Oszillator 7 vorgesehen ist, der in Abhängigkeit von einem ihm zugeführten Steuersignal Ausgangssignale unterschiedlicher Frequenz erzeugt, die einem mit ferromagnetischer Resonanz arbeitenden Regelkreis zugeführt werden. Im Normalbetrieb ist die Frequenz der Ausgangssignale des Oszillators derart, daß der Regelkreis eine angeschlossene Last ausreichend mit Energie versorgt. Beim Standby-Betrieb ist die Frequenz der Ausgangssignale des Oszillators derart, daß der Betrieb des Regelkreises unterbrochen wird.

Weiterhin ist aus der DE-PS 24 58 302 ein Sperrwandler-Netzteil für einen Fernsehempfänger mit Ultraschall-Fernbedienung bekannt, der als Betriebszustand u. a. einen Bereitschaftsbetrieb aufweist. Bei dieser Schaltung sind der Fernsehempfänger und der Ultraschall-Empfänger an den selben Tranntransformator sekundärseitig angeschlossen. Die Umschaltung zwischen Normalbetrieb und Bereitschaftsbetrieb wird auf der Sekundärseite des Trenntransformators vorgenommen. Bei dieser Schaltung ist jedoch ein zusätzlicher Transformator für die Horizontalendstufe nötig.

Die Aufgabe der Erfindung besteht darin, bei einem Schaltnetzteil mit kombinierter Horizontal-Endstufenschaltung der im Oberbegriff des Anspruchs 1 angegebenen Art auf besonders einfache Art und Weise den Standby-Betrieb zu ermöglichen.

Diese Aufgabe wird durch das Kennzeichen des Patentanspruchs 1 gelöst.

Die Vorteile der Erfindung liegen insbesondere darin, daß als galvanische Trennstelle nur ein Transformator für die Erzeugung der Betriebsspannung, der Hochspannung, der Horizontalablenkung und der Heizspannung nötig ist und aufgrund der gewählten Wicklungsanordnung mit Hilfe des Horizontal-Ablenktransistors und der primärseitigen Regelschaltung auf besonders einfache Art und Weise eine Steuerung des Standby-Betriebes durchgeführt werden kann.

Ein weiterer Vorteil besteht darin, daß im Falle einer sekundärseitigen Störung automatisch der Standby-Betrieb herbeigeführt wird.

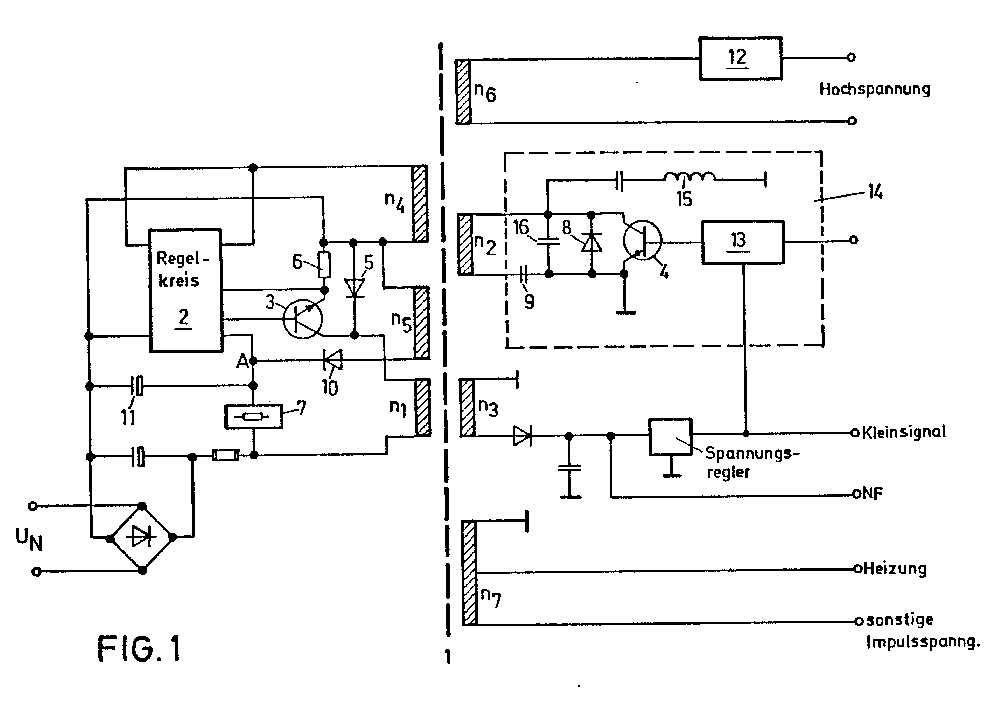

Die Erfindung wird nachfolgend unter Bezugnahme auf das aus der Figur 1 ersichtliche Ausführungsbeispiel näher erläutert.

Die Schaltung wird über die Netzspannung $U_N$ mit nachgeschalteter Gleichrichterbrücke mit einer ungeregelten Gleichspannung versorgt und ist über nur einen Transformator 1 vom Netz getrennt, wobei der Transformator die Stromversorgung für das synchronisierte Schaltnetzteil sowie die Impuls- bzw. Hochspannungserzeugung übernimmt. Wie durch die gestrichelte Linie zum Ausdruck kommt, ist die Netzseite völlig von der Schaltungsseite galvanisch getrennt.

In der Anlaufphase wird über eine Startschaltung 7, die im einfachsten Fall aus einem hochohmigen Widerstand besteht, der Kondensator 11 aufgeladen. In dieser Phase gibt die Regelschaltung 2 keine Impulse an die Basis des Regelschalters 3 ab. Erst wenn die Spannung am Punkt A einen vorgegebenen Wert (z. B. 10 V) erreicht hat, wird über eine regelschaltungsinterne Stabilisierungsschaltung die gesamte Schaltung in Betrieb genommen. Die Regelschaltung 2 liefert Impulse an die Basis des Regelschalters 3, tastet also den Regelschalter 3 auf. Über den Regelschalter 3 fließt somit ein pulsierender Strom in die Primärwicklung $n_1$ des Transformators.

Die Wicklungen $n_1$, $n_3$ und $n_5$ sind fest

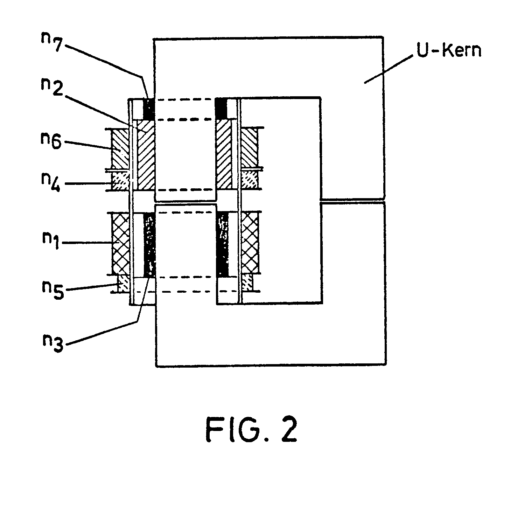

miteinander verkoppelt. Die Wicklungen $n_2$, $n_4$, $n_6$ und $n_7$ sind untereinander fest, aber lose an die vorgenannten Wicklungen $n_1$, $n_3$ und $n_5$ gekoppelt. Ein Beispiel dafür, wie die genannten Kopplungsverhältnisse erreicht werden können, zeigt die Figur 2.

Die Wicklung $n_5$ liefert über eine Diode 10 einen gegenüber der Anlaufphase höheren Strom an den Kondensator 11, so daß in der weiteren Folge die Versorgung der Regelschaltung 2 sichergestellt ist.

Durch die zweite, fest an $n_1$ und lose an $n_2$ angekoppelte Sekundärwicklung $n_3$ wird die Niedervoltspannung für die Kleinsignalstufen und die NF-Stufe und den Horizontaloszillator bzw. die Treiberschaltung 13 der Horizontalendstufe 14 gewonnen, und damit die Ansteuerung des Ablenktransistors 4 sichergestellt.

In die lose an $n_1$ gekoppelte Sekundärwicklung $n_2$ wird eine Spannung induziert, die nach Gleichrichtung mittels einer Diode 8 an den Kondensator 9 die benötigte Betriebsspannung für den Ablenkkreis liefert und somit den Anlauf der Horizontalendstufe herbeiführt.

Über die Trennstelle $n_1/n_2$ wird ferner die an der Ablenkwicklung 15 stehende Spannung während des Rücklaufintervalls der Ablenkschaltung invertiert auf die Primärwicklung $n_1$ übertragen, um den Strom im Hauptstromweg während der Rücklaufzeit bei der Schaltung des Regelschalters 3 und damit die Abschaltverluste zu vermindern. Dieser Vorgang ist ausführlich beispielsweise in der DE-OS 28 35 946 dargestellt.

Aus einer fest an die Wicklung $n_2$ und lose an $n_1$ angekoppelten Wicklung $n_4$ des Transformators wird eine Rücklaufspannung gewonnen, die abhängig von der Belastung der Wicklung $n_2$ ist.

Strahlstromänderungen in der Hochspannungserzeugung über die Wicklung $n_6$ und der Hochspannungskaskade 12 (bzw. Split) werden über die fest an $n_6$ gekoppelte Wicklung $n_2$ bzw. die fest an $n_2$ gekoppelte Wicklung $n_4$ an die Regelschaltung 2 weitergegeben, die die Stromflußzeit im Hauptstromkreis bzw. den Regelschalter 3 beeinflußt. Somit werden über die Regelschaltung 2 Belastungsschwankungen ausgeregelt.

Hingegen werden Belastungsänderungen in der Wicklung $n_3$, wie sie beispielsweise durch NF-Laständerungen gegeben sind, fast nicht nachgeregelt, da die Wicklung $n_3$ nur lose mit den Wicklungen $n_2$ und $n_4$ verkoppelt ist. Deshalb ist die Zeilenablenkschaltung weitgehend unabhängig von Laständerungen in der Sekundärwicklung $n_3$.

Die Netzspannungsnachregelung für die Spannungen, die aus der Wicklung $n_3$ gewonnen werden, erfolgt indirekt über die Regelimpulse der Wicklung $n_4$. So würde sich beispielsweise bei Netzunterspannung die Rücklaufspannung ohne Nachregelung verringern. Durch die Impulse der Wicklung $n_4$ wird jedoch über die Regelschaltung 2 die Leitzeit des Regelschalters 3 verlängert. Damit wird mehr Energie von der Primär- auf die Sekundärseite übertragen und demzufolge Netzspannungsänderungen ausgeglichen.

Bei der Umschaltung vom Normalbetrieb in den Standby-Betrieb schaltet der Regelkreis 2 die Spannung am Punkt A auf den vorgegebenen Wert von z. B. 10 V. Diese Standby-Umschaltung steht in Verbindung mit einer Verkürzung der Leitzeit des Regelschalters 3, die wie folgt ausgelöst wird:

Über die Wicklung $n_3$ bzw. eine Treiberschaltung 13 der Horizontalansteuerstufe wird die Basis des Ablenktransistors 4 so gesteuert, daß der Ablenktransistor ständig leitet. Demzufolge kann sich im Kondensator 9 und damit auch in der Sekundärwicklung $n_2$ keine Spannung aufbauen. Da die Wicklung $n_6$ für die Hochspannungserzeugung, die Wicklung $n_7$ für die Erzeugung einer Heizspannung und sonstige Impulsspannungen sowie die Wicklung $n_4$ für die Synchronisation und Steuerung der Regelschaltung 2 fest mit der Wicklung $n_2$ verkoppelt sind, können weder Hochspannung noch Heizung noch sonstige Impulsspannungen entstehen. Damit sind sämtliche im Standby-Betrieb nicht benötigten Spannungen abgeschaltet, ziehen also keine Leistung aus dem Netz. Außerdem schaltet wegen des Wegfalls der Rücklaufspannungen an $n_4$ die Regelschaltung im beschriebenen Sinne den Regelschalter 3 auf Standby-Betrieb um.

Dagegen ist die im Standby-Betrieb nötige Versorgung der Sekundärseite mit Niedervoltspannung weiterhin gewährleistet, da die Wicklung $n_3$, über die diese Versorgung erfolgt, fest mit der Primärwicklung $n_1$ und nur lose mit der Sekundärwicklung $n_2$ verkoppelt ist. Die Nachregelung der Niedervoltspannung kann - falls nötig - mit Hilfe der Spannung erfolgen, die in die ebenfalls fest an $n_1$ gekoppelte Wicklung $n_5$ induziert wird, die ansonsten nur die Energie für die Versorgung der Regelschaltung liefert.

Der Übergang vom Standby-Betrieb auf den Normalbetrieb geschieht durch die Sperrung des Ablenktransistors 4 und dessen weitere periodische Ansteuerung. Die an der Wicklung $n_2$ entstehende Spannung wird in der fest an $n_2$ gekoppelten Wicklung $n_4$ induziert. Diese Rückschlagimpulse gelangen an den Triggereingang der Regelschaltung 2. Diese führt einen internen Spannungsvergleich durch und führt die Schaltung wieder in den geregelten Normalzustand über.

Die dargestellte Schaltung ermöglicht es somit, den Ablenktransistor 4 der Horizontalendstufenschaltung in besonders einfacher Weise für die Steuerung des Standby-Betriebes zu verwenden.

Ein besonderer Vorteil der erfindungsgemäßen Schaltung liegt darin, daß im Falle einer sekundärseitigen Störung, z. B. einem Kurzschluß der Diode 8 oder des Kondensators 16, die Schaltung automatisch in den Standby-Betrieb übergeführt wird. Denn im Falle eines Kurzschlusses der Diode 8 oder des Kondensators 16 kann sich an $n_2$ keine Spannung aufbauen. Dies gilt ebenso für die Wicklung $n_4$, die fest an $n_2$ gekoppelt ist und die Rückschlagimpulse an den Triggereingang der Regelschaltung 2 liefert. Auch an der Wicklung $n_6$ für die Hochspannungserzeugung und der Wicklung $n_7$ für die Erzeugung einer Heizspannung, die beide ebenfalls fest an $n_2$ gekoppelt sind, kann sich keine Spannung aufbauen.

**Patentansprüche**

1. Schaltnetzteil mit kombinierter Horizontalendstufenschaltung in Fernsehempfängern, bei dem als galvanische Trennstelle zwischen Netz- und Chassisseite nur ein Transformator (1) vorgesehen ist, dessen Primärwicklung ($n_1$) mit mindestens einer chassisseitigen Sekundärwicklung ($n_3$) und einer netzseitigen Sekundärwicklung ($n_5$) fest und weiteren Sekundärwicklungen, ($n_2$, $n_4$, $n_6$, $n_7$) die ihrerseits fest aneinandergekoppelt sind, lose gekoppelt ist, wobei eine der fest miteinander verkoppelten Sekundärwicklungen ($n_2$) mit dem Ablenktransistor (4) der Horizontalendstufe (14) elektrisch verbunden ist, und bei dem ein primärseitiger, im Normalbetrieb von Rücklaufimpulsen synchronisierter Regelkreis (2) einen Regelschalter steuert, der in Serie zur Primärwicklung ($n_1$) des Transformators (1) angeordnet ist, dadurch gekennzeichnet, daß
- der im Normalbetrieb periodisch angesteuerte Ablenktransistor (4) der Horizontalendstufe (14) durch die Treiberschaltung (13) im Bereitschaftsbetrieb ständig leitend gehalten wird,
- die von der Netz- zur Chassisseite übertragene Energiemenge während des Bereitschaftsbetriebes, bei dem dem Regelkreis keine Rücklaufimpulse zugeführt werden, nach Maßgabe der Vorsorgungsspannung des Regelkreises (2), die über die netzseitige, fest an die Primärwicklung ($n_1$) gekoppelte Sekundärwicklung ($n_5$) gewonnen wird, nachgeregelt wird,
- und die im Bereitschaftsbetrieb auf der Chassisseite für die Treiberschaltung (13) und weitere Verbraucher benötigte Energie über die fest an die Primärwicklung ($n_1$) gekoppelte, chassisseitige Sekundärwicklung ($n_3$) übertragen wird.

**Claim**

1. Switched-mode power supply with a combined horizontal output stage circuit in television receivers, in which, as a point of electrical isolation between mains and chassis side, only a transformer (1) is provided, the primary winding ($n_1$) of which is tightly coupled to at least one chassis-side secondary winding ($n_3$) and one mains-side secondary winding ($n_5$) and is loosely coupled to further secondary windings ($n_2$, $n_4$, $n_6$, $n_7$) which, in turn, are tightly coupled to each other, in which arrangement one of the secondary windings ($n_2$) tightly coupled to each other is electrically connected to the deflection transistor (4) of the horizontal output stage (14), and in which a primary-side regulating circuit (2), which is synchronized by flyback pulses in normal operation, controls a regulating switch which is arranged in series with the primary winding ($n_1$) of the transformer (1), characterized in that
- the deflection transistor (4), which is periodically triggered in normal operation, of the horizontal output stage (14) is kept continuously conductive by the driver circuit (13) in standby mode of operation,
- the amount of energy transferred from the mains-side to the chassis side is corrected in accordance with the determination of the supply voltage of the regulating circuit (2), which is obtained via the mains-side secondary winding ($n_5$) tightly coupled to the primary winding ($n_1$), during the standby mode of operation during which no flyback pulses are supplied to the regulating circuit,
- and the energy needed in standby mode of operation on the chassis side for the driver circuit (13) and other loads is transferred via the chassis-side secondary winding ($n_3$) tightly coupled to the primary winding ($n_1$).

**Revendications**

1. Elément de réseau de commutation auquel est combiné un circuit formant étage final de lignes dans des récepteurs de télévision et dans lequel il est prévu comme point de séparation galvanique entre le côté réseau et le côté châssis, uniquement un transformateur (1), dont l'enroulement primaire ($n_1$) est couplé de façon serrée à au moins un enroulement secondaire ($n_3$) situé du côté châssis et un enroulement secondaire ($n_5$) situé du côté réseau et est couplé de façon lâche à d'autres enroulements secondaires ($n_2$, $n_4$, $n_6$, $n_7$), qui sont pour leur part couplés entre eux de façon serrée, l'un des enroulements secondaires ($n_2$) couplés entre eux de façon serrée étant relié électriquement au transistor de balayage (4) de l'étage terminal de lignes (14), et dans lequel un circuit de réglage (2) situé du côté primaire et synchronisé par des impulsions de retour lors du fonctionnement normal, commande un commutateur de réglage qui est branché en série avec l'enroulement primaire ($n_1$) du transformateur (1), caracterisé en ce que:
- le transistor de balayage (4), commandé périodiquement pendant le fonctionnement normal, de l'étage final de lignes (14) est maintenu en permanence conducteur par le circuit d'attaque (13), pendant le fonctionnement à l'état de disponibilité,

- la quantité d'énergie transmise du côté réseau au côté châssis pendant le fonctionnement à l'état de disponibilité, lors duquel aucune impulsion de retour n'est envoyée au circuit de réglage, est réglée de façon asservie en fonction de la tension d'alimentation du circuit de réglage (2), qui est obtenue par l'intermédiaire de l'enroulement secondaire ($n_5$) situé côté réseau et couplé de façon serrée à l'enroulement primaire ($n_1$), et

- l'énergie nécessaire pour le circuit d'attaque (13) et d'autres appareils d'utilisation du côté châssis lors du fonctionnement à l'état de disponbilité est transmise par l'intermédiaire de l'enroulement secondaire ($n_3$) situé du côté châssis et couplé de façon serrée à l'enroulement primaire ($n_1$).

FIG.1

$U_N$

Regel-kreis 2

$n_4$

6

5

3

$n_5$

A

10

11

7

$n_1$

$n_6$

12

Hochspannung

15

14

16

8

$n_2$

9

13

4

$n_3$

Kleinsignal

Spannungs-regler

NF

Heizung

$n_7$

sonstige Impulsspanng.

0 133 980

FIG. 2